# EUROPÄISCHE PATENTSCHRIFT

(11) **EP 2 090 944 B1**
(45) Veröffentlichungstag und Bekanntmachung des Hinweises auf die Patenterteilung: **26.10.2011**
(21) Anmeldenummer: 08002770.9
(22) Anmeldetag: 14.02.2008
(51) Int. Cl.: G05B 19/042, G05B 19/418, G03G 15/00, B65H 18/28, B41J 2/01

(54) **Druckmaschinen und Verfahren zur kabellosen Datenerfassung von den mit RFID ausgestattenen internen Komponenten**
Printer and method for wireless RFID-based internal components data recording
Imprimante et méthode pour communication sans fil avec ses composants internes équipés de RFID

(43) Veröffentlichungstag der Anmeldung: 19.08.2009
(73) Patentinhaber: SIEMENS AKTIENGESELLSCHAFT, 80333 München (DE)
(72) Erfinder: Dirsch, Bernhard, 91056 Erlangen (DE); Karl, Stephan, 85072 Eichstätt (DE); Rettner, Lothar, 91056 Erlangen (DE); Schlinkert, Jochen, 91315 Höchstadt/Aisch (DE)

(56) Entgegenhaltungen:
- EP-A- 1 060 895
- EP-A- 1 647 406
- DE-A1- 10 300 071
- US-A- 5 491 540
- US-A1- 2003 025 027
- US-A1- 2004 239 706
- US-A1- 2007 063 013

## Beschreibung

Die vorliegende Erfindung betrifft ein Verfahren zur automatischen Erfassung wenigstens einer Eigenschaft zumindest einer auswechselbaren Komponente einer Druckmaschine zur Herstellung von Druckerzeugnissen und/oder zumindest einer auswechselbaren Komponente einer Maschine zur Druckweiterverarbeitung und/oder -nachbearbeitung und ein System mit einer Druckmaschine zur Herstellung von Druckerzeugnissen und einer Maschine zur Druckweiterverarbeitung und/oder -nachbearbeitung.

Unter dem Begriff "Druckerzeugnisse" sollen gemäß der vorliegenden Erfindung verschiedene Erzeugnisse der Druckindustrie verstanden werden, wobei sich die Spanne der von diesem Begriff abgedeckten Produkte von einem bedruckten Material bis hin zu einer fertigen Zeitschrift, einem Heft oder ähnlichem erstrecken soll.

Gattungsgemäße Vorrichtungen sind beispielsweise Druckmaschinen, welche zum Bedrucken von Material vorgesehen sind. Das unbedruckte Material liegt dazu in der Regel als Materialbahn vor, die üblicherweise aus einem geeigneten Papier besteht und zum Bedrucken meist von einer Rolle abgewickelt wird, auf der auch die Lagerung der Materialbahn erfolgen kann. Eine solche Rolle mit der darauf aufgewickelten Materialbahn wird allgemein auch als "Abwickler" bezeichnet, wenn das auf der Rolle befindliche Material einer Produktion zugeführt wird. Nach dem Abwickeln der Materialbahn wird diese mittels geeigneter Druckeinrichtungen, wie beispielsweise einem Druckzylinder oder mehreren Druckzylindern, bedruckt. Es ist zudem bekannt, die Materialbahn nach dem Bedrucken wieder auf eine Rolle aufzuwickeln, um einen einfachen Transport und/oder eine geeignete Lagerung der bedruckten Materialbahn zu ermöglichen, wobei eine solche Rolle auch als "Aufwickler" bezeichnet wird.

Des Weiteren sind Sammelheftlinien als gattungsgemäße Vorrichtungen bekannt, welche im Zuge der Druckweiterverarbeitung oder -nachbearbeitung eingesetzt werden können. Die mittels der Druckmaschinen hergestellten Druckerzeugnisse werden nach geeignetem Zuschnitt beispielsweise einer Sammelheftlinie zugeführt, welche die einzelnen Zuschnitte zum Beispiel zu einer Zeitschrift oder ähnlichem zusammenfügt. Diese Weiterverarbeitung der mittels Druckmaschinen hergestellten Druckerzeugnisse findet meist unter Verwendung einer größeren Anzahl von Anlegestationen statt, wobei unterschiedliche Anlegestationstypen verwendet werden können, welche gemäß dem jeweiligen Anwendungszweck der Vorrichtung in einer geeigneten Anzahl ausgewählt werden.

Die oben beschriebenen Vorrichtungen werden manuell, das heißt durch Personal, mit geeigneten Komponenten, beispielsweise mit wenigstens einer der oben beschriebenen Komponenten Abwickler, Aufwickler bestückt, mit denen die gewünschte Be- und/oder Verarbeitung von Material erfolgen kann. Eine wünschenswerte automatische Kontrolle der ordnungsgemäßen Vorrichtungskonfiguration wird bei Vorrichtungen dem Stand der Technik nicht durchgeführt, wodurch die Konfiguration oft fehlerhaft sein kann, was zu erheblichem Ausschuss und den damit verbundenen Mehrkosten führt. Zudem wäre es wünschenswert, wenn austauschbare Systemkomponenten Informationen bezügliche ihres bisherigen Einsatzes aufwiesen, um eventuell solche Betriebsdaten zur vorbeugenden Instandhaltung einer entsprechenden Vorrichtung zur Verfügung zu haben, indem beispielsweise frühzeitig erkennbar ist, dass einen Komponente bald ausgewechselt werden sollte, wofür zur Verringerung der durch das Auswechseln verursachten Standzeit der Vorrichtung rechtzeitig geeignete Vorkehrungen getroffen werden können.

DE 103 00 071 A1 offenbart ein Verfahren zur Anbringung von adressatspezifischen Medien an puckenzeugmissen (wie Karten z.B.) wobei die Bogen von "Trägerzeitschrift" zweist geduckt dann im Sammelheft getragen werden.

Es ist eine Aufgabe der vorliegenden Erfindung, ein Verfahren zur automatischen Erfassung wenigstens einer Eigenschaft zumindest einer austauschbaren Komponente einer Vorrichtung zur Herstellung von Druckerzeugnissen bereitzustellen, mit der ein fehlerfreier Betrieb der Vorrichtung mit sehr kurzen Standzeiten realisierbar ist.

Diese Aufgabe wird erfindungsgemäß durch ein Verfahren nach Anspruch 1 sowie durch ein System nach Anspruch 2 gelöst.

Erfindungsgemäß ist vorgesehen, dass die automatische Erfassung wenigstens einer Eigenschaft zumindest einer austauschbaren Komponente der Vorrichtung unter Verwendung mindestens einer elektronischen Einrichtung zur drahtlosen Erfassung von komponentenbezogenen Daten erfolgt. Über die Einrichtung zur drahtlosen Erfassung von komponentenbezogenen Daten kann ein uni- oder auch bidirektionaler Informationsaustausch erfolgen, wodurch zum einen wenigstens eine Eigenschaft zumindest einer Komponente der Vorrichtung erfassbar ist und zudem der Komponente Informationen bezüglich ihres Einsatzes, das heißt bisherige Betriebsdaten, mitgegeben werden können. Somit ist einerseits die auftragsabhängige Konfiguration der Vorrichtung kontrollierbar, um die Fehleranfälligkeit beim Bestücken der Vorrichtung mit der Komponente zu unterdrücken. Auf der anderen Seite kann eine vorbeugende Instandsetzung der Vorrichtung erfolgen, indem zunächst einer Komponente mitgegebene Betriebsdaten erfasst werden, wodurch die weiteren Einsatzmöglichkeiten der Komponente ermittelbar sind und eventuelle Standzeiten der Vorrichtung, welche beispielsweise zum Auswechseln einer durch Verwendung unbrauchbar gewordenen Komponente erforderlich sind, weitestgehend zu reduzieren, so dass der Betrieb der Vorrichtung sehr viel effektiver und damit kostengünstiger erfolgen kann.

Im Rahmen der Erfindung ist auch die Erfassung mehrerer Eigenschaften einer Komponente möglich, welche zum Erreichen der oben genannten Ziele geeignet sind. Beispielsweise kann als Eigenschaft die bisherige Einsatzzeit oder die Art der bisherigen Verwendung der Komponente erfasst werden, wodurch Aufschlüsse über weitere Einsatzmöglichkeiten für die Komponente gezogen werden können. Derartige Informationen können zum Beispiel am Ende eines vorhergegangenen Einsatzes der Komponente dieser mitgegeben werden und stehen somit für einen erneuten Einsatz zur Verfügung.

Ferner können nach der vorliegenden Erfindung mehrere Komponenten zum Einsatz kommen, von denen jeweils wenigstens eine Eigenschaft automatisch erfasst wird. Dazu ist die Verwendung mehrerer elektronischer Einrichtungen zur drahtlosen Erfassung von komponentenbezogenen Daten vorteilhaft, insbesondere einer solchen Anzahl von Einrichtungen, wie austauschbare Komponenten vorhanden sind. Austauschbar meint hierbei, dass es sich bei den Komponenten um solche Baueinheiten der Vorrichtung handelt, welche zur jeweiligen Anpassung der Vorrichtung für den auftragsgemäßen Verwendungszweck gegen geeignete austauschbar sind, oder dass eine unbrauchbar gewordene Komponente gegen eine brauchbare ausgetauscht wird. Das kann beispielsweise bei einem Abwickler erforderlich sein, wenn das gesamte Material von diesem abgewickelt worden ist, der Abwickler also für die weitere Produktion unbrauchbar ist.

Nach einer vorteilhaften Ausgestaltung der Erfindung wird als Eigenschaft der Typ der Komponente erfasst. Insbesondere diese Ausgestaltung ermöglicht es, dass die Bestückung der Vorrichtung mit einer oder auch mehreren austauschbaren Komponenten kontrollierbar ist, das heißt, ob die für einen bestimmten Verwendungszweck der Vorrichtung mindestens eine geeignete Komponente vorhanden ist. Beispielsweise kann eine Freigabe der Vorrichtung dann erfolgen, wenn die Kontrolle der Konfiguration der Vorrichtung ergibt, dass die für einen bestimmten Verwendungszweck der Vorrichtung geeigneten Komponenten an der Vorrichtung angeordnet sind.

Eine weitere vorteilhafte Ausgestaltung der Erfindung sieht vor, dass als Eigenschaft Betriebsdaten der Komponente erfasst werden. Diese Ausgestaltung dient der vorbeugenden Instandhaltung der Vorrichtung, indem auf Basis der Betriebsdaten auf den bisherigen Einsatz der Komponente geschlossen werden kann und somit die weitere Einsatzmöglichkeit der Komponente kalkulierbar ist, so dass beispielsweise eine bevorstehende Unbrauchbarkeit der Komponente früh erkennbar ist und dadurch bereits vor dem Eintreten der Unbrauchbarkeit Vorkehrungen getroffen werden können, um die unbrauchbar gewordene Komponente zur weitestgehenden Reduzierung der Standzeit der Vorrichtung schnellstmöglich gegen eine brauchbare Komponente auszuwechseln. Zudem ist denkbar, dass sowohl der Typ einer Komponente als auch deren Betriebsdaten als Eigenschaften erfasst werden, was neben der Kontrolle der Konfiguration der Vorrichtung gleichzeitig eine effektive Nutzung der Vorrichtung gewährleistet, indem eine zum Auswechseln einer unbrauchbare gewordenen Komponente benötigte Standzeit der Vorrichtung weitestgehend reduziert wird.

Mit einer weiteren vorteilhaften Ausgestaltung der Erfindung wird vorgeschlagen, dass an der Komponente eine ausles- und beschreibbare Speichereinheit und an einer stationären Basiseinheit der Vorrichtung eine Sende-/Empfangseinheit angeordnet werden. Diese Anordnung der Einrichtungen zur drahtlosen Erfassung von komponentenbezogenen Daten stellt eine sehr einfache und kostengünstige Lösung für die automatische Erfassung wenigstens einer Eigenschaft der zumindest einen Komponente dar, indem die ausles- und beschreibbare Speichereinheit zur Erfassung der Eigenschaft der Komponente mittels der Sende-/Empfangseinheit ausgelesen und zur Mitgabe von Betriebsdaten bezüglich des bisherigen Einsatzes der Komponente beschrieben werden kann. Es lassen sich so die in der Speichereinheit gespeicherten Eigenschaften, wie beispielsweise der Komponententyp und komponentenspezifische Betriebsdaten, auslesen, welche zur effektiven Nutzung einer entsprechenden Vorrichtung weiterverarbeitet werden können.

Gemäß einer weiteren vorteilhaften Ausgestaltung der Erfindung wird die Sende-/Empfangseinheit an der bestimmungsgemäßen Position der Komponente an der Vorrichtung angeordnet. Hierdurch ist es insbesondere möglich, neben einer Eigenschaft der Komponente auch deren Position an der Vorrichtung auf einfache Art und Weise zu erfassen, indem der Sende-/Empfangseinheit eine bestimmte Position an der Vorrichtung zugewiesen wird, so dass, wenn mit der Sende-/Empfangseinheit eine Eigenschaft einer Komponente erfasst wird, diese Information zugleich eine Positionsinformation enthält. Dieses kann dann von Vorteil sein, wenn an der Vorrichtung mehrere Typen von Komponenten angeordnet werden, welche zum jeweiligen Zweck der Vorrichtung an bestimmten Positionen angeordnet werden sollen. Somit kann eine effektive Kontrolle der Konfiguration einer entsprechenden Vorrichtung erfolgen, indem erfasst wird, welcher Komponententyp an welcher Position der Vorrichtung angeordnet ist. Dieses verhindert eine Fehlkonfiguration der Vorrichtung, wobei bei einem zusätzlichen Erfassen von komponentenspezifischen Betriebsdaten zugleich eine sehr effektive Nutzung der Vorrichtung erfolgen kann.

In vorteilhafter Weise wird die Erfindung dahingehend weitergebildet, dass die erfasste Eigenschaft zur Weiterverarbeitung an eine Steuer- und Regeleinrichtung übermittelt wird. Durch die mit der Steuer- und Regeleinrichtung durchführbare Weiterverarbeitung von Eigenschaften, wie beispielsweise den Komponententyp oder komponentenbezogene Betriebsdaten, kann eine Kontrolle der Konfiguration mittels einer geeigneten Verarbeitungssoftware und/oder -elektronik erfolgen, wodurch die Effektivität der Vorrichtung deutlich gesteigert wird.

Von Vorteil ist, wenn mittels der Steuer- und Regeleinrichtung ein Abgleich der Eigenschaft mit vorgegebenen Soll-Daten erfolgt, wodurch eine Kontrolle der Konfiguration der Vorrichtung sehr einfach möglich ist. Beispielsweise weist die Steuer- und Regeleinrichtung eine Soll-Konfiguration für die Vorrichtung auf, die auftragsbezogen für einen bestimmten Anwendungszweck ausgebildet ist. Wird nun eine der durch die Soll-Konfiguration vorgegebenen Komponenten an einer stationären Basiseinheit der Vorrichtung, wie beispielsweise an einem Maschinensockel, angeordnet, so kann der Typ der Komponente mittels der Einrichtung zur drahtlosen Erfassung von komponentenbezogenen Daten automatisch erfasst werden. Diese Typdaten können zusammen mit den Positionsdaten der Sende-/Empfangseinheit an die Steuer- und Regeleinrichtung gesendet werden, welche über den Abgleich von Soll- und Ist-Konfiguration sofort erkennen kann, ob an der erfassten Position an der stationären Basiseinheit ein geeigneter Komponententyp zur Erreichung des jeweiligen Anwendungszwecks der Vorrichtung angeordnet ist. Auf diese Art und Weise kann eine Konfiguration aus beliebig vielen Komponenten, welche an der stationären Basiseinheit angeordnet werden können, auf einfache Weise kontrolliert werden. Damit ist eine Produktion von Druckerzeugnissen unter weitestgehender Reduzierung von Ausschuss möglich, was die Produktionskosten dieser Druckerzeugnisse senkt. Diese Effektivität der Vorrichtung kann durch die Erfassung und Weiterverarbeitung von komponentenbezogenen Betriebsdaten weiter gesteigert werden, indem eventuelle Standzeiten der Vorrichtung weitestgehend reduziert werden.

Es wird weiter vorgeschlagen, dass die Steuer- und Regeleinrichtung auf Basis des Ergebnisses des Abgleichs Steuer- und Regelsignale zur Steuerung und Regelung der Vorrichtung erstellt. Beispielsweise kann eine Freigabe der Vorrichtung über ein Steuersignal erst dann erfolgen, wenn mittels des Abgleichs eine bestimmungsgemäße Konfiguration der Vorrichtung festgestellt worden ist, sich also die in der Steuerund Regeleinrichtung vorhandene Soll-Konfiguration mit der erfassten Ist-Konfiguration deckt. Denkbar ist aber auch, dass das Erfassen einer fehlerhaften Ist-Konfiguration der Vorrichtung auf irgendeine andere Art und Weise signalisiert wird.

Zudem kann durch die Weiterverarbeitung von komponentenbezogenen Betriebsdaten beispielsweise erkannt werden, dass eine Komponente bald unbrauchbar wird. Wird dieses anhand der erfassten Betriebsdaten und einer geeigneten Weiterverarbeitung derselben erkannt, so kann die Steuer- und Regeleinrichtung ein entsprechendes Benachrichtigungssignal ausgeben, welches beispielsweise dem Bedienpersonal anzeigt, dass ein Austausch einer Komponente bevorsteht. Damit können die für einen Austausch erforderlichen Vorkehrungen zeitnah getroffen werden, was die für die Auswechselung der Komponente benötigte Zeit und damit die Standzeit der Vorrichtung weitestgehend reduziert. Zudem kann die Steuer- und Regeleinrichtung die Vorrichtung nach Bestimmung des Zeitpunkts einer notwendigen Auswechselung einer unbrauchbar gewordenen Komponente auf Basis der erfassten Betriebsdaten der Komponente zu einem geeigneten Zeitpunkt anhalten, wodurch die Produktion von Ausschuss ebenfalls erfolgreich vermieden werden kann.

Ferner wird es für vorteilhaft erachtet, wenn mittels der Steuer- und Regeleinrichtung und über die Sende-/Empfangseinheit Betriebsdaten an die ausles- und beschreibbare Speichereinheit gesendet und dort gespeichert werden. Beispielsweise kann die Einsatzdauer oder ähnliches der Komponente an der Vorrichtung mittels der Steuer- und Regeleinrichtung ermittelt werden und über die Einrichtung zur drahtlosen Erfassung von komponentenbezogenen Daten an die Komponente übermittelt werden, so dass der Komponente Betriebsinformationen mitgegeben werden können, welche bei einem erneuten Einsatz der Komponente wieder zur Weiterverarbeitung erfassbar sind, was sich, wie oben beschrieben, sehr positiv auf die Produktivität und Effektivität der Vorrichtung auswirkt.

Nach einem weiteren Vorschlag wird als elektronische Einrichtung zur drahtlosen Erfassung von komponentenbezogenen Daten ein RFID-System verwendet, wobei ein eine ausles- und beschreibbare Speichereinheit aufweisender RFID-Transponder an der Komponente und eine RFID-Sende-/Empfangseinheit an der Vorrichtung angeordnet wird. Diese Ausgestaltung stellt eine einfache und kostengünstige Lösung dar, mit der die oben beschriebenen Vorteile der automatischen Erfassung wenigstens einer Eigenschaft zumindest einer Komponente einer Vorrichtung zur Herstellung von Druckerzeugnissen erreichbar sind. Alternativ kann aber auch eine anders ausgebildete elektronische Einrichtung verwendet werden, welche beispielsweise Flash-Chip-Elemente als Speichereinheiten und zum Beispiel Bluetooth-Schnittstellen aufweist.

Insgesamt wird also mit der Erfindung ein Verfahren zur automatischen Erfassung wenigstens einer Eigenschaft zumindest einer Komponente einer Vorrichtung zur Herstellung von Druckerzeugnissen vorgeschlagen, welches die Produktivität und Effektivität der Vorrichtung unter geringem Kostenaufwand und auf einfache Art und Weise enorm steigert.

Zur Lösung der obigen Aufgabe wird mit der Erfindung des Weiteren eine Vorrichtung zur Herstellung von Druckerzeugnissen bereitgestellt, die eine stationäre Basiseinheit und mehrere daran anordbare Komponenten aufweist. Mittels dieser Vorrichtung können die verschiedensten Druckerzeugnisse hergestellt werden, wobei die Art der Komponenten dem jeweiligen Anwendungszweck, das heißt der jeweiligen Produktreihe, angepasst werden können, indem bestimmte Komponententypen in einer geeigneten Anzahl an bestimmungsgemäßen Positionen an der stationären Basiseinheit angeordnet werden.

Erfindungsgemäß weist die Vorrichtung wenigstens eine elektronische Einrichtung zur drahtlosen Erfassung von komponentenbezogenen Daten auf. Dadurch lässt sich der oben beschriebene Vorteil erreichen, dass zumindest eine Eigenschaft, wie beispielsweise der Komponententyp oder komponentenbezogene Betriebsdaten, der wenigstens einen Komponente zur Kontrolle der bestimmungsgemäßen Konfiguration der Vorrichtung erfassbar sind, was die Produktivität der Vorrichtung deutlich steigert. Als weitere Eigenschaft kann beispielsweise bei einem Abwickler erfasst werden, welchen Materialtyp in welcher Menge der Abwickler aufweist.

Gemäß einer vorteilhaften Ausgestaltung der Erfindung weist die elektronische Einrichtung zur drahtlosen Erfassung von komponentenbezogenen Daten eine ausles- und beschreibbare Speichereinheit und eine Sende-/Empfangseinheit auf, wobei die ausles- und beschreibbare Speichereinheit vorzugsweise an einer Komponente und die Sende-/Empfangseinheit bevorzugt an der stationären Basiseinheit angeordnet sind. Dabei kann vorgesehen sein, dass die Sende-/Empfangseinheit an der bestimmungsgemäßen Position der Komponente an der Vorrichtung angeordnet ist, wodurch neben der Eigenschaft der Komponente auch deren Position an der Vorrichtung, insbesondere an der stationären Basiseinheit, erfassbar ist, was insbesondere bei einer Vorrichtung mit einer großen Anzahl von Komponenten von Vorteil ist, da somit erfassbar ist, welcher Komponententyp an welcher Position an der stationären Basiseinheit angeordnet ist.

In vorteilhafter Weise ist die elektronische Einrichtung zur drahtlosen Erfassung von komponentenbezogenen Daten ein RFID-System mit einem RFID-Transponder und einer RFID-Sende-/Empfangseinheit ist, wodurch eine sehr kostengünstige Ausgestaltung der Einrichtung gewählt wird. Wie oben beschrieben, können aber auch andere geeignete Ausgestaltungen verwendet werden.

Nach einer weiteren vorteilhaften Ausgestaltung der Erfindung weist die Vorrichtung eine Steuer- und Regeleinrichtung auf, mit der die erfassten Daten, das heißt beispielsweise der Typ der Komponente und deren Position an der stationären Basiseinheit sowie weitere Betriebsdaten, weiterverarbeitet werden können, zum Beispiel um einen Abgleich einer vorgegebenen Soll-Konfiguration der Vorrichtung mit der vorhandenen Ist-Konfiguration durchzuführen. Gemäß dem vorbeschriebenen Verfahren sind dadurch Ausschuss durch eine fehlerhafte Konfiguration der Vorrichtung und auch lange Standzeiten derselben vermeidbar, wodurch die Vorrichtung eine sehr hohe Produktivität und Effektivität erhält.

Gemäß einer weiteren vorteilhaften Ausgestaltung der Erfindung ist die Vorrichtung eine Druckmaschine und die Komponente eine Abwickeleinheit, eine Aufwickeleinheit und/oder ein Druckzylinder ist. Insbesondere kann jede dieser Komponenten einen RFID-Transponder aufweisen, um bestimmte Eigenschaften der Komponenten mit RFID-Sende-/Empfangseinheiten erfassen zu können, die vorzugsweise jeweils an der bestimmungsgemäßen Position der entsprechenden Komponente an der stationären Basiseinheit angeordnet sind. Die Abwickeleinheit entspricht im Wesentlichen einem bekannten Abwickler, während die Aufwickeleinheit im Wesentlichen einem bekannten Aufwickler entspricht.

Beispielsweise kann erfasst werden, wenn die Position für eine Abwickeleinheit mit einer solchen besetzt wird und um welchen Typ es sich bei der Abwickeleinheit handelt. Zudem kann in dem Speicher des RFID-Transponders der Abwickeleinheit gespeichert sein, welche Materialsorte auf der Abwickeleinheit bevorratet ist und wie viel Material dieser Sorte auf der Abwickeleinheit vorhanden ist. Es ist nämlich möglich, dass eine Abwickeleinheit bereits im Zuge vorhergehender Produktionen verwendet wurde, jedoch das Material der Abwickeleinheit nicht aufgebraucht wurde. In diesem Fall ist es wünschenswert, wenn die noch auf der Abwickeleinheit verbliebene Materialmenge bestimmt werden kann, um beispielsweise zu berechnen, wann ein Auswechseln der nach Abgabe des gesamten Materials unbrauchbar gewordenen Abwickeleinheit erfolgen muss.

Zu diesem Zweck können zur Verkürzung der hierfür erforderlichen Rastzeit der Vorrichtung die geeigneten Vorkehrungen, wie beispielsweise das Anliefern einer weiteren Abwickeleinheit, rechtzeitig angeordnet und getroffen werden, wodurch die Vorrichtung eine sehr hohe Produktivität und Effektivität erhält.

Auch die Erfassung von Eigenschaften einer Aufwickeleinheit und deren Position an der stationären Basiseinheit bringt den vorbeschriebenen Vorteil. Beispielsweise kann anhand des Typs der Aufwickeleinheit erkannt werden, wie viel Material und welches Material auf die Aufwickeleinheit aufwickelbar und/ oder bereits auf diese aufgewickelt ist, wobei mittels der Steuer- und Regeleinrichtung berechenbar sein kann, wann die Aufwickeleinheit voll ist und daher ein Auswechseln der Aufwickeleinheit gegen eine Aufwickeleinheit mit weniger oder gar keinem Material erfolgen sollte. Auch durch diese Kalkulierung des Zeitpunkts einer bevorstehenden Auswechselung der Abwickeleinheit können hierfür erforderliche Maßnahmen rechtzeitig getroffen werden. Falls die mit Material in einer bestimmten Menge versehene Abwickeleinheit für weitere Verarbeitungen des Material zur Verfügung gestellt werden soll, so kann die Art des auf der Abwickeleinheit befindlichen Materials sowie dessen Menge mittels eines RFID-System erfasst werden, was somit auch die Weiterverarbeitung des mittels der Druckmaschine bedruckten Materials vereinfacht.

Weiterhin kann ebenso wenigstens eine Eigenschaft zumindest eines Druckzylinders erfasst werden, wobei als Eigenschaft beispielsweise das an dem Druckzylinder angeordnete Druckmotiv erfassbar ist. Insbesondere ist dies bei Tiefdruckmaschinen von Interesse, bei denen wenigstens ein Tiefdruckzylinder mit einem eingravierten Druckmotiv versehen ist.

Eine weitere vorteilhafte Ausgestaltung der Erfindung sieht vor, dass die Vorrichtung eine Maschine zur Druckweiterverarbeitung und/oder -nachbearbeitung und die Komponente eine Anlegestation ist. Solche Maschinen sind beispielsweise Sammelheftlinien, welche meist bei der Herstellung von Druckerzeugnissen wie Zeitschriften, Hefte und ähnlichem Anwendung finden. Vom jeweiligen Auftrag abhängig werden solche Maschinen mit einer geeigneten Anzahl von Anlegestationen versehen, wobei sich die Typen der Anlegestationen unterscheiden können. Gerade bei solchen Maschinen ist es wünschenswert, dass die Konfiguration der Maschine kontrollierbar ist, indem automatisch erfasst wird, welche Position der Maschine mit welchem Typ einer Anlegestation belegt ist. Diese Kontrolle kann auf einfache Art und Weise durch die Verwendung mehrerer RFID-Systeme und einer damit verbundenen Steuer- und Regeleinrichtung durchgeführt werden, wobei beispielsweise jede der vorhandenen Positionen der stationären Basiseinheit der Maschine, an denen eine Anlegestation angeordnet werden kann, mit einer RFID-Sende-/Empfangseinheit ausgestattet ist. Wird nun eine Anlegestation an einer solchen Position angeordnet, so kann mittels eines Abgleichs zwischen einer vorgegebenen Soll-Konfiguration und einer mittels der RFID-Systeme erfassten Ist-Konfiguration durch die Steuer- und Regeleinrichtung festgestellt werde, ob der gewünschte Typ einer Anlegestation an der bestimmungsgemäßen Position an der stationären Basiseinheit der Maschine angeordnet ist, um dem jeweiligen Anwendungszweck der Vorrichtung beziehungsweise der Maschine zu genügen.

Mit der vorliegenden Erfindung wird zur Lösung der obigen Aufgabe ferner ein System zur Herstellung von Druckerzeugnissen vorgeschlagen, dass durch eine vorbeschriebene Druckmaschine und eine vorbeschriebene Vorrichtung zur Weiterverarbeitung von Druckerzeugnissen gekennzeichnet ist, wobei das System eine Abwickeleinheit, eine Aufwickeleinheit, wenigstens einen Druckzylinder und zumindest eine Anlegestation aufweist. Dieses System ist somit mit sehr vielen Komponenten bestückt, was es insbesondere erfordert, dass alle Komponenten vom für den Einsatzzweck des Systems geeigneten Typ und an der bestimmungsgemäßen Position im System angeordnet sind. Die hierzu wünschenswerte automatische Kontrolle der bestimmungsgemäßen Konfiguration des Systems kann durch die Anordnung einer geeigneten Anzahl von RFID-Systemen und deren vorbeschriebenes Zusammenwirken mit einer Steuer- und Regeleinrichtung auf einfache Art und Weise erfolgen.

Im Sinne der vorliegenden Erfindung wird weiter eine Verwendung eines RFID-Systems zur automatischen Identifizierung wenigstens einer Komponente eines Systems zur Herstellung von Druckerzeugnissen vorgeschlagen, durch welche Verwendung die oben beschriebenen Vorteile erreichbar sind.

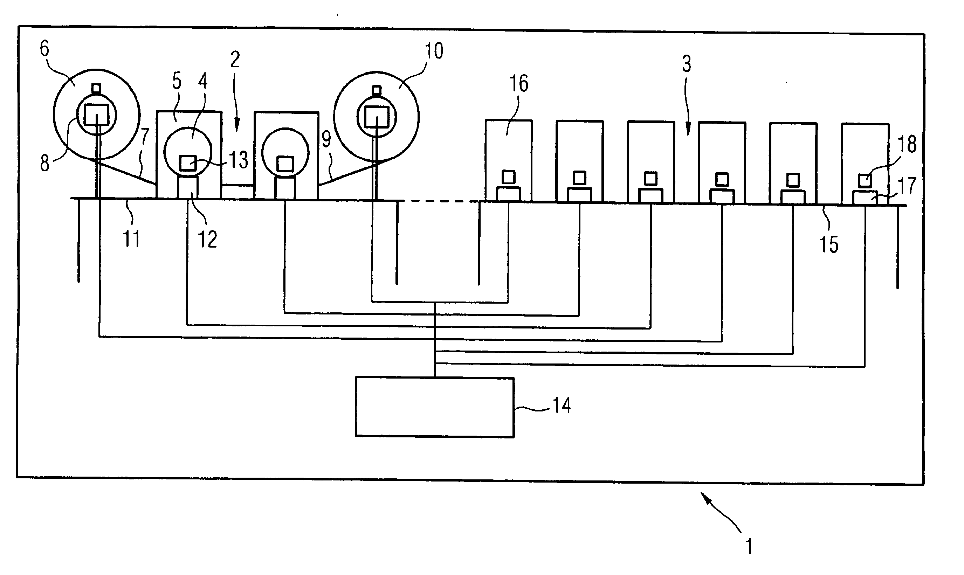

Weitere Vorteile und Merkmale der vorliegenden Erfindung werden im Folgenden anhand der Figuren beschrieben. Dabei zeigt
- FIG 1: eine schematische Darstellung eines Ausführungsbei- spiels für das erfindungsgemäße System zur Herstellung von Druckerzeugnissen.

In FIG 1 ist ein schematisches Ausführungsbeispiel für das erfindungsgemäße System 1 zur Herstellung von Druckerzeugnissen dargestellt, welches System 1 beispielsweise zur Herstellung von Zeitschriften oder ähnlichem geeignet ist. Die linke Seite der FIG 1 zeigt als Ausführungsvariante der erfindungsgemäßen Vorrichtung eine Druckmaschine 2, während auf der rechten Seite der FIG 1 als Ausführungsbeispiel für die erfindungsgemäße Vorrichtung eine Sammelheftlinie 3 gezeigt ist.

Die Druckmaschine 2 weist in der gezeigten Ausführungsvariante zwei Druckzylinder 4 auf, die jeweils mit einem für den vorgegebenen Anwendungszweck des Systems 1 angepassten Druckmotiv versehen sind. Zur Ausführung ihrer Funktion sind die Druckzylinder 4 jeweils an einer Halteeinrichtung 5 angeordnet. Die Druckmaschine 2 weist des Weiteren eine Abwickeleinheit 6 auf, welche als eine mit einer Materialbahn 7 umwickelten Rolle 8 ausgebildet ist. Die Materialbahn 7, welche in dem Ausführungsbeispiel aus einem für den Anwendungszweck des Systems 1 geeigneten Papier besteht, wird zum Bedrucken den Druckzylindern 4 zugeführt und von diesen mit einem gewünschten Druck versehen, so dass mit der Druckmaschine ein erstes Druckerzeugnis herstellbar ist. Nach dem Bedrucken der Materialbahn 7 wird in dem gezeigten Ausführungsbeispiel die bedruckte Materialbahn 9 einer Aufwickeleinheit 10 zugeführt, welche ebenfalls aus einer mit dem bedruckten Material 9 umwickelten Rolle 8 ausgebildet ist. Durch das Aufwickeln der bedruckten Materialbahn 9 kann diese direkt zu einer Weiterverarbeitung zugeführt werden oder auf einfache Weise für eine spätere Verwendung gelagert werden.

An den bestimmungsgemäßen Positionen der Komponenten Abwickeleinheit 6, Druckzylinder 4 und Aufwickeleinheit 10 sind an der stationären Basiseinheit 11 der Druckmaschine 2 mehrere RFID-Sende-/Empfangseinheiten 12 angeordnet, mit denen komponentenbezogene Daten bezüglich der Komponenten Abwickeleinheit 6, Druckzylinder 4 und Aufwickeleinheit 10 erfassbar sind, welche in einer ausles- und beschreibbaren Speichereinheit der RFID-Transponder 13 gespeichert sind, die an den jeweiligen Komponenten angeordnet sind. Eine beispielsweise Eigenschaft der Abwickeleinheit 6, welche mit dem RFID-System aus RFID-Transponder und RFID-Sende-/Empfangseinheit erfassbar sind, ist die Sorte oder die Beschaffenheit des auf der Abwickeleinrichtung bevorrateten Materials oder auch dessen Menge. Bei den Druckzylindern 4 ist beispielsweise das auf ihnen angeordnete Druckmotiv erfassbar, welches dazu als Information in der Speichereinheit des RFID-Transponders hinterlegt ist. Der Aufwickeleinheit 10 kann hingegen über die RFID-Sende-/Empfangseinheit eine Information über die auf ihr aufgewickelte Materialmenge und deren Beschaffenheit mitgegeben werden, wozu entsprechende Daten in die Speichereinheit des RFID-Transponders geschrieben werden. Wird die Aufwickeleinheit 10 für eine Weiterverarbeitung verwendet, so kann die auf der Speichereinheit hinterlegte Information wieder ausgelesen werden, um einen möglichst effektiven Produktionsablauf zu sichern.

Des Weiteren kann erfasst werden wie viel Material noch auf der Abwickeleinheit 6 vorhanden ist. Auf Basis dieser Information kann eine mit den RFID-Sende-/Empfangseinheiten verbundene Steuer- und Regeleinrichtung 14 berechnen, wann ein Auswechseln der Abwickeleinheit 6 erfolgen sollte, um die dafür erforderlichen Maßnahmen rechtzeitig einzuleiten, damit die Dauer des Stillstands der Druckmaschine 2 weitestgehend reduziert wird. Zum anderen kann mittels der Steuer- und Regeleinrichtung 14 ein Abgleich von einer vorgegebenen Soll-Konfiguration der Druckmaschine 2 mit einer erfassten Ist-Konfiguration erfolgen, so dass die Druckmaschine erst freigegeben wird, wenn eine Übereinstimmung von Ist- und Soll-Konfiguration vorliegt. Dieses verhindert, dass die Druckmaschine 2 in Betrieb genommen wird, obwohl ein für den jeweiligen Anwendungszweck der Druckmaschine 2 falscher Druckzylinder 4 durch Personal an der Druckmaschine 2 angeordnet worden ist, was zu hohem Ausschuss und den damit verbundenen Folgekosten führen würde.

Schon hier zeigt sich, dass mit dem erfindungsgemäßen Verfahren und der erfindungsgemäßen Vorrichtung, das heißt mit der Druckmaschine 2, eine sehr effektive Produktion von Druckerzeugnissen unter geringem Kostenaufwand möglich ist.

Der rechte Teil der FIG 1 zeigt ein Ausführungsbeispiel für eine erfindungsgemäße Vorrichtung, die als Sammelheftlinie 3 ausgebildet ist. Diese weist ebenso eine stationäre Basiseinheit 15 auf, an der in der gezeigten Ausführung sechs Anlegestationen 16 angeordnet sind. Jede der Anlegestationen 16, welche sich im Typ unterscheiden können, ist an einer vorgegebenen Anordnungsposition an der Basiseinheit 15 angeordnet, wobei jede dieser Positionen mit einer RFID-Sende-/Empfangseinheit 17 versehen ist, die ebenfalls mit der Steuer- und Regeleinrichtung 14 verbunden sind. Die Anlegestationen 16 weisen jeweils einen RFID-Transponder 18 auf, der beispielsweise in seiner Speichereinheit Typdaten und weitere komponentenbezogene Daten aufweisen kann. Mittels der Steuer- und Regeleinrichtung 14 kann nun die bestimmungsgemäße Konfiguration der Sammelheftlinie 3 kontrolliert werden, indem durch einen Abgleich von Soll- und Ist-Konfigurationsdaten festgestellt werden kann, ob die für den jeweiligen Anwendungszweck der Sammelheftlinie 3 geeigneten Anlegestationstypen vorhanden sind und ob diese an der richtigen Position an der Basiseinheit 15 angeordnet sind. Als weitere Eigenschaften der Anlagestationen 16 können beispielsweise die bisherige Einsatzdauer oder das noch in der Anlagestation 16 vorhandene Material erfasst werden, so dass auf Basis dieser Informationen und einer geeigneten Weiterverarbeitung derselben mittels der Steuer- und Regeleinrichtung 14 eine vorbeugende Instandhaltung der Sammelheftlinie 3 erfolgen kann.

Es zeigt sich auch hier, dass mittels des erfindungsgemäßen Verfahrens und der erfindungsgemäßen Vorrichtung eine sehr effektive Produktion von Druckerzeugnissen unter geringem Kostenaufwand erfolgen kann.

FIG 1 zeigt insgesamt ein System 1, welches durchaus noch weitere Bestandteile wie beispielsweise Verpackungseinrichtungen und ähnliches aufweisen kann, wobei sich das System 1 durch eine hohe Produktivität und Effektivität auszeichnet.

## Patentansprüche

1. Verfahren
zur automatischen Erfassung wenigstens einer Eigenschaft zumindest einer auswechselbaren Komponente (4) einer Druckmaschine (2) zur Herstellung einer Zeitschrift
und zur automatischen Erfassung wenigstens einer Eigenschaft zumindest einer auswechselbaren Komponente (16) einer Sammelheftlinie (3) zur Druckweiterverarbeitung
in einem System umfassend eine solche Druckmaschine (2) und eine solche Sammelheftlinie (3)
wobei die Druckmaschine (2) eine stationäre Basiseinheit (11) und mehrere an der Basiseinheit angeordnete Komponenten aufweist, wobei es sich bei den Komponenten um eine Abwickeleinheit (6), eine Aufwickeleinheit (10) und wenigstens einen Druckzylinder (4) handelt,
und wobei die Sammelheftlinie (3) eine stationäre Basiseinheit (15) und mehrere an der Basiseinheit angeordnete Komponenten aufweist, wobei es sich bei den Komponenten um Anlagestationen (16) handelt,
**dadurch gekennzeichnet, dass**
das Erfassen der wenigstens einen Eigenschaft unter Verwendung mindestens einer elektronischen Einrichtung zur drahtlosen Erfassung von komponentenbezogenen Daten erfolgt, wobei es sich bei der elektronische Einrichtung um ein RFID-System handelt mit einem eine ausles- und beschreibbare Speichereinheit aufweisenden RFID-Transponder (13, 18) und einer RFID-Sende-/Empfangseinheit (12, 17),
wobei die Speichereinheit an einer Komponente (6,10,4,16) und die RFID-Sende-/Empfangseinheit (12,17) an der bestimmungsgemäßen Position der Komponente an der Basiseinheit (11, 15) angeordnet sind,
und wobei die elektronische Einrichtung zur automatischen Erfassung von komponentenbezogenen Daten dient, nämlich zur automatischen Erfassung der Art der Komponente und zur automatischen Erfassung von Betriebsdaten der Komponente, und
wobei die erfasste Eigenschaft zur Weiterverarbeitung an eine Steuer- und Regeleinrichtung (14) übermittelt wird, mittels der ein Abgleich der Eigenschaft mit Soll-Daten erfolgt, wobei die Steuer- und Regeleinrichtung (14) auf Basis des Ergebnisses des Abgleichs Steuer- oder Regelsignale zur Steuerung bzw. Regelung der Druckmaschine (2) und/oder der Sammelheftlinie (3) erstellt.

2. System
umfassend eine Druckmaschine (2) zur Herstellung einer Zeitschrift und eine Sammelheftlinie (3) zur Druckweiterverarbeitung,
wobei die Druckmaschine (2) eine stationäre Basiseinheit (11) und mehrere an der Basiseinheit angeordnete Komponenten aufweist, wobei es sich bei den Komponenten um eine Abwickeleinheit (6), eine Aufwickeleinheit (10) und wenigstens einen Druckzylinder (4) handelt,
und wobei die Sammelheftlinie (3) eine stationäre Basiseinheit (15) und mehrere an der Basiseinheit angeordnete Komponenten aufweist, wobei es sich bei den Komponenten um Anlagestationen (16) handelt,
und wobei die Druckmaschine (2) und/oder die Sammelheftlinie (3) eine Steuer- und Regeleinrichtung aufweist,
**dadurch gekennzeichnet, dass** die Druckmaschine (2) und die Sammelheftlinie (3) wenigstens eine elektronische Einrichtung zur drahtlosen Erfassung von komponentenbezogenen Daten aufweist, wobei es sich bei der elektronische Einrichtung zur drahtlosen Erfassung von komponentenbezogenen Daten um ein RFID-System handelt mit einem eine ausles- und beschreibbare Speichereinheit aufweisenden RFID-Transponder (13,18) und einer RFID-Sende-/Empfangseinheit (12,17),
wobei die Speichereinheit an einer Komponente (6, 10, 4, 16) und die Sende-/Empfangseinheit an der bestimmungsgemäßen Position der Komponente an der Basiseinheit (11, 15) angeordnet sind,
und wobei die elektronische Einrichtung zur Erfassung von komponentenbezogenen Daten dient, nämlich zur Erfassung der Art der Komponente und zur Erfassung von Betriebsdaten der Komponente,
wobei die erfasste Eigenschaft zur Weiterverarbeitung an die Steuer- und Regeleinrichtung (14) übermittelt wird, mittels der ein Abgleich der Eigenschaft mit Soll-Daten erfolgt, wobei die Steuer- und Regeleinrichtung (14) auf Basis des Ergebnisses des Abgleichs Steuer- oder Regelsignale zur Steuerung bzw. Regelung der Druckmaschine (2) und/oder der Sammelheftlinie (3) erstellt.

## Claims

1. Method
for the automatic detection of at least one property of at least one replaceable component (4) of a printing press (2) for production of a periodical
and for the automatic detection of at least one property of at least one replaceable component (16) of a combined binding line (3) for further print processing
in a system comprising such a printing press (2) and such a combined binding line (3)
wherein the printing press (2) has a stationary base unit (11) and several components arranged on the base unit, wherein the components are an unkinder unit (6), a rewinder unit (10) and at least one printing cylinder (4),
and wherein the combined binding line (3) has a stationary base unit (15) and several components arranged on the base unit, wherein the components are connected stations (16),
**characterised in that**
the detection of the at least one property is effected using at least one electronic device for the wireless detection of component-related data, wherein the electronic device is an RFID system with an RFID transponder (13, 18) fitted with a read/write storage unit and with an RFID transceiver unit (12, 17),
wherein the storage unit is arranged on a component (6, 10, 4, 16) and the RFID transceiver unit (12, 17) is arranged at the intended position of the component on the base unit (11, 15),
and wherein the electronic device is used for the automatic detection of component-related data, namely for the automatic detection of the type of component and for the automatic detection of operating data of the component, and
wherein the detected property is sent to a control unit (14) for further processing, by means of which control unit a comparison of the property with desired data is effected, wherein the control unit (14) generates, on the basis of the result of the comparison, control signals for controlling the printing press (2) and/or the combined binding line (3).

2. System
comprising a printing press (2) for production of a periodical, and a combined binding line (3) for further print processing,
wherein the printing press (2) has a stationary base unit (11) and several components arranged on the base unit, wherein the components are an unwinder unit (6), a rewinder unit (10) and at least one printing cylinder (4),
and wherein the combined binding line (3) has a stationary base unit (15) and several components arranged on the base unit, wherein the components are connected stations (16),
and wherein the printing press (2) and/or the combined binding line (3) has a control unit,
**characterised in that**
the printing press (2) and the combined binding line (3) have at least one electronic device for the wireless detection of component-related data, wherein the electronic device for the wireless detection of component-related data is an RFID system with an RFID transponder (13, 18) fitted with a read/write storage unit and with an RFID transceiver unit (12, 17),
wherein the storage unit is arranged on a component (6, 10, 4, 16) and the transceiver unit is arranged at the intended position of the component on the base unit (11, 15),
and wherein the electronic device is used for the detection of component-related data, namely for the detection of the type of component and for the detection of operating data of the component,
wherein the detected property is sent to the control unit (14) for further processing, by means of which control unit a comparison of the property with desired data is effected, wherein the control unit (14) generates, on the basis of the result of the comparison, control signals for controlling the printing press (2) and/or the combined binding line (3).

## Revendications

1. Procédé de détection automatique d'au moins une propriété d'au moins un composant ( 4 ) remplaçable d'une imprimeuse de préparation d'une revue
et de détection automatique d'au moins une propriété d'au moins un composant ( 16 ) remplaçable d'une ligne (3) d'encarteuse-piqueuse pour le traitement ultérieur d'impression
dans un système comprenant une imprimeuse ( 2 ) de ce genre et une ligne ( 3 ) d'encarteuse-piqueuse de ce genre dans lequel l'imprimeuse ( 2 ) comporte un groupe (11) de base fixe et plusieurs composants disposés sur le groupe de base, les composants étant un groupe ( 6 ) de déroulement et un groupe ( 10 ) d'enroulement et au moins un cylindre (4) d'impression,
et dans lequel la ligne ( 3 ) d'encarteuse-piqueuse comporte un groupe ( 15 ) de base fixe et plusieurs composants disposés sur le groupe de base, les composants étant des postes ( 16 ) d'installation,
**caractérisé en ce que**
on effectue la détection de la au moins une propriété en utilisant au moins un dispositif électronique pour la détection sans fils de données se rapportant aux composants, le dispositif électronique étant un système RFID ayant un transpondeur ( 13, 18 ) RFID comportant une unité de mémoire dans laquelle on peut lire et écrire et une unité ( 12, 17 ) d'émission/réception RFID,
dans lequel l'unité de mémoire est disposée sur un composant ( 6, 10, 4, 16 ) et l'unité ( 12, 17 ) d'émission/réception RFID est disposée sur le groupe ( 11, 15 ) de base en la position du composant conforme à la prescription,
et dans lequel le dispositif électronique sert à la détection automatique de données se rapportant aux composants, à savoir à la détection automatique du type du composant et à la détection automatique de données de fonctionnement du composant, et
dans lequel la propriété détectée est transmise en vue du traitement ultérieur à un dispositif ( 4 ) de commande et de régulation au moyen duquel une égalisation de la propriété a des données de consigne s'effectue, le dispositif ( 14 ) de commande et de régulation établissant, sur la base des résultats de l'égalisation, des signaux de commande ou de régulation pour la commande ou la régulation de l'imprimeuse ( 2 ) et/ou de la ligne ( 3 ) d'encarteuse-piqueuse.

2. Système
comprenant une imprimeuse ( 2 ) de production d'une revue et une ligne ( 3 ) d'encarteuse-piqueuse pour continuer l'impression,
dans lequel l'imprimeuse ( 2 ) comporte un groupe ( 11 ) de base fixe et plusieurs composants disposés sur le groupe de base, les composants étant un groupe ( 6 ) de déroulement et un groupe ( 10 ) d'enroulement et au moins un cylindre ( 4 ) d'impression,
et dans lequel la ligne ( 3 ) d'encarteuse-piqueuse comporte un groupe ( 15 ) de base fixe et plusieurs composants disposés sur le groupe de base, les composants étant des postes ( 16 ) d'installation,
et dans lequel l'imprimeuse ( 2 ) et/ou la ligne ( 3 ) d'encarteuse-piqueuse a un dispositif de commande et de régulation
**caractérisé en ce que**
l'imprimeuse ( 2 ) et la ligne ( 3 ) d'encarteuse-piqueuse a au moins un dispositif électronique de détection sans fil de données se rapportant aux composants, le dispositif électronique de détection sans fil de données se rapportant aux composants étant un système RFID ayant un transpondeur ( 13, 18 ) RFID comportant une unité de mémoire dans laquelle on peut lire et dans laquelle on peut écrire et une unité ( 12, 17 ) d'émission/réception RFID,
dans lequel l'unité de mémoire est disposée sur un composant ( 6, 10, 4, 16 ) et l'unité d'émission/réception RFID est disposée sur le groupe ( 11, 15 ) de base en la position du composant conforme à la prescription,
et dans lequel le dispositif électronique sert à la détection automatique de données se rapportant aux composants à savoir, à la détection automatique du type du composant et à la détection automatique de données de fonctionnement du composant,
dans lequel la propriété détectée est transmise en vue du traitement ultérieur à un dispositif ( 4 ) de commande et de régulation au moyen duquel une égalisation de la propriété a des données de consigne s'effectue, le dispositif ( 14 ) de commande et de régulation établissant, sur la base des résultats de l'égalisation, des signaux de commande ou de régulation pour la commande ou la régulation de l'imprimeuse ( 2 ) et/ou de la ligne ( 3 ) d'encarteuse-piqueuse.
